# FASCICULE DE BREVET EUROPEEN

(11) **EP 1 492 975 B1**
(45) Date de publication et mention de la délivrance du brevet: **12.04.2006**
(21) Numéro de dépôt: 03727606.0
(22) Date de dépôt: 21.03.2003
(51) Int. Cl.: F16L 11/16

(54) **CONDUITE TUBULAIRE FLEXIBLE A GAINE EN POLYMERE THERMOPLASTIQUE ELASTOMERE**
FLEXIBLE ROHRLEITUNG MIT SCHICHT AUS THERMOPLASTISCHEM ELASTOMER
FLEXIBLE TUBULAR PIPE COMPRISING AN ELASTOMERIC THERMOPLASTIC POLYMER SHEATH

(30) Priorité: 28.03.2002 FR 0203931
(43) Date de publication de la demande: 05.01.2005
(73) Titulaire: Technip France, 92400 Courbevoie (FR)
(72) Inventeur: HARDY, Jean, F-76360 Barentin (FR); COUTAREL, Alain, F-76130 Mont Saint Aignan (FR)
(74) Mandataire: Bertrand, Didier
(86) Numéro de dépôt international: PCT/FR2003/000909
(87) Numéro de publication internationale: WO 2003/083344

(56) Documents cités:
- WO-A-95/24578
- US-A- 5 024 252

## Description

La présente invention concerne une conduite tubulaire flexible du type de celles utilisées pour l'exploitation et le transport des fluides dans l'industrie pétrolière offshore. Elle concerne plus précisément certaines gaines polymériques qui sont un des éléments constitutifs de ces conduites flexibles.

De telles conduites sont décrites dans de nombreux brevets de la demanderesse tels que par exemple les brevets FR 2.782 141 ou FR 2 744 511. Elles satisfont entre autre aux recommandations de l'API 17B (American Petroleum Institute Recommended Practice 17B). Ces conduites sont formées d'un ensemble de couches différentes destinées chacune à permettre à la conduite flexible de supporter les contraintes de service ou de manutention ainsi que les contraintes spécifiques liées à leur utilisation offshore. Ces couches comprennent notamment des gaines polymériques et des couches de renfort formées par des enroulements de fil de forme, de feuillard ou de fils en matériau composites, mais elle peuvent comprendre également des enroulements de bandes diverses entre les différentes couches de renfort. Elles comprennent plus particulièrement au moins une gaine d'étanchéité interne ou gaine de pression destinée à véhiculer le fluide transporté. Ladite gaine d'étanchéité peut être l'élément le plus interne de la conduite (la conduite est alors dite de type « smooth bore ») où être disposée autour d'une carcasse formée par exemple de l'enroulement à pas court d'un feuillard agrafé (la conduite est alors dite de type « rough-bore »). Des couches de renforts formés d'enroulement de fils métalliques ou composites sont généralement disposées autour de la gaine de pression et peuvent comporter par exemple :
- Une armure de pression formée d'un enroulement à pas court d'un fil de forme métallique agrafé, ladite armure de pression étant disposée directement autour de la gaine d'étanchéité afin de reprendre la composante radiale de la pression interne.
- Une frette formée d'un enroulement à pas court d'un fil de forme non agrafée située au-dessus de l'armure de pression pour contribuer à la résistance à la pression interne, ladite frette et l'armure de pression formant ce qui est appelé une voûte de pression.
- Des nappes d'armures de traction formées d'enroulements à pas long de fils de forme métalliques ou composites, lesdites nappes étant destinées à reprendre la composante axiale de la pression interne ainsi que les sollicitations longitudinales que subit la conduite, comme par exemple les efforts de pose.

Une gaine polymérique externe ou gaine de protection est généralement prévue au-dessus des couches de renfort précédemment citées. Dans certains cas, une gaine polymérique intermédiaire est également prévue. Cette gaine intermédiaire peut par exemple être une gaine dite anti-collapse disposée autour de la voûte de pression. Cette gaine anti-collapse a notamment pour objectif d'empêcher l'écrasement (ou « collapse » en anglais) de a gaine d'étanchéité et de la carcasse éventuelle qu'elle entoure lorsque l'annulaire (espace situé entre la gaine d'étanchéité et la gaine externe) est soumis à une pression excessive comme par exemple, lorsque la gaine externe est endommagée et n'est plus étanche.

Une telle conduite est connue par US-A-5 024 252.

En raison de l'application spécifique de ces conduites au transport de fluide et notamment d'hydrocarbures en milieu marin, l'ensemble des couches constitutives de ces conduites et en particulier les gaines polymériques sont soumises à des conditions excessivement sévères qu'elles doivent être capables de supporter. Ainsi pour les gaines polymériques, plusieurs problèmes sont rencontrés en fonction de la position de la gaine à l'intérieur de la conduite (gaine d'étanchéité interne, gaine anti-collapse, gaine de protection externe).
• Les gaines d'étanchéité ou gaines de pression, sont soumises à des températures élevées et sont au contact du fluide transporté. Elles doivent résister aux attaques chimiques potentielles du fluide combinées à des contraintes liées à la pression et la température.
• Les gaines externes et intermédiaires peuvent être également soumises à des températures qui restent relativement élevées (jusqu'à 100°c) due à la conduction thermique interne. Les gaines extérieures peuvent aussi subir des températures très faibles dues à leur utilisation dans des mers froides d'une part mais également, pour les lignes dites Riser dynamique, aux conditions atmosphériques géographiques locales (jusqu'à -25°C) ainsi qu'à l'agression des embruns, des UV pour la partie émergeante et située entre la surface de la mer et la connexion sous ou sur le support flottant (splash zone en anglais). Les conduites peuvent également être confrontées à des problèmes de déchirure ou d'abrasion liés notamment à leur manipulation lors de la mise en place des conduites par exemple. Par ailleurs leur contact direct avec le milieu marin soulève pour certains polymères utilisés comme les polyamides, les polyesters ou les capolyamides également des problèmes de résistance à l'hydrolyse. La durée de vie des conduites tubulaires offshore étant calculée pour une durée de champs jusqu'à vingt ans par exemple, il est nécessaire de s'assurer que les gaines externes sont capables de résister aux sollicitations précitées pendant cette période. La combinaison de toutes ces contraintes fait que le choix du matériau formant la gaine externe s'est porté sur des matériaux présentant une résistance suffisante en regard des contraintes précitées.
• Les gaines dites intermédiaires (ou gaines anti-collapse) sont, elles aussi , soumises à des conditions sévères (pression, température, frottements, hydrolyse...) qui nécessitent également de s'assurer de leur tenue sur la période de vie calculée de la conduite.

A l'heure actuelle, la plupart des gaines externes et intermédiaires sont réalisées en thermoplastique tel que le polyéthylène ou les polyamides. Ces matériaux présentent des caractéristiques mécaniques et des propriétés chimiques qui leur permettent d'obtenir des résultats satisfaisants dans l'ensemble. Ils présentent toutefois un inconvénient majeur lié à leur coût qui est très élevé d'une part, mais d'autre part ils présentent, pour le polyéthylène, une résistance en fatigue limitée, une résistance à la propagation de fissure mauvaise et un allongement au seuil conventionnel faible (environ 10% à 23°C) Quant aux polyamides, modifiés ou non élastomères, ils présentent une tenue à l'hydrolyse limitée. Les caractéristiques de ces matériaux sont jugées négatives et pénalisantes au regard des contraintes ci avant énoncées, et ce notamment dans les applications dites dynamiques c'est à dire les conduites montantes (« Risers » en anglais) qui relient une installation sous-marine à un équipement de surface. Par ailleurs, une autre contrainte peut s'exercer sur ces gaines externes dues à la diffusion de gaz dans l'annulaire pour le transport de certains fluides. Une telle diffusion est bien connue et des systèmes de drainage sont prévus pour permettre de contrôler la pression régnant dans l'annulaire. Toutefois ces systèmes d'expulsion du gaz ne peuvent fonctionner que pour des gradients de pression déterminés entre la pression dans l'annulaire et la pression externe, ce qui oblige la gaine externe à résister à cette différence.

On connaît dans d'autres domaines des matériaux sensiblement moins onéreux tels que certains thermoplastiques élastomères qui sont utilisés comme par exemple pour former des joints ou diverses pièces et qui sont bien connues notamment de l'industrie automobile. Ces thermoplastiques élastomères sont par exemple des TPU, SBS/SEBS, copolyetheresters, copolyether-amide, EPDM/PP, TPO ou TPOVD.

Ces thermoplastiques élastomères sont généralement recherchés pour leur capacité à être mis en oeuvre par des méthodes similaires à celles utilisées pour les thermoplastiques (extrusion, injection, moulage) combinée à leurs propriétés d'élasticité ou leur capacité à se déformer qui leur sont conférées par l'élastomère qu'ils contiennent.

Bien que WO-A-95/24578 et WO-A-00/33841 décrivant entre autres l'utilisation de thermoplastiques élastomères dans des conduites, ces thermoplastiques élastomères présentent des caractéristiques qui tendent à empêcher leur utilisation dans le domaine des conduites pétrolières offshores et plus particulièrement pour les structures dites dynamiques. Ainsi, ils résistent généralement mal à l'exposition aux UV et présentent des problèmes de vieillissement sous les conditions d'ambiance extérieure rencontrées dans l'application spécifique offshore. Dans leurs formes commerciales courantes, ils présentent également une capacité de déformation trop importante due à leur formulation avec une quantité, généralement importante d'extendeurs. Ces formulations riches en extendeurs, sont inutilisables dans le contexte d'une gaine externe de pipeline notamment en raison de leur forte déformation sous une sollicitation combinée de pressions locales importantes et de contraintes axiales générées par les tensionneurs et/ou le poids pendu de la conduite flexible lors des opérations de pose.

C'est pour toutes ces raisons que l'homme du métier a été amené à délaisser cette catégorie de matériau au profit des matériaux thermoplastiques qui présentent des caractéristiques qui sont en adéquation avec les exigences dues à l'exploitation pétrolière en milieu marin. Toutefois, il a été découvert de manière surprenante par la demanderesse à l'encontre de l'ensemble de ces préjugés, que certains thermoplastiques élastomères pouvaient dans certaines conditions être utilisés pour former des gaines polymériques de conduite flexible pour des applications pétrolières offshore et plus particulièrement dans le cadre des structures flexibles dites dynamiques.

Le but de l'invention est donc de proposer une conduite flexible de transport de fluide du type utilisé dans l'exploitation pétrolière offshore dont au moins la gaine externe ou la gaine intermédiaire est réalisée en thermoplastique élastomère en dépit des obstacles rédhibitoires précédemment signalés et des préjugés de l'homme du métier.

La conduite selon l'invention est conforme à la revendication 1 annexée.

Selon une autre caractéristique de l'invention, le thermoplastique élastomère est avantageusement réalisé sur la base d'une polyoléfine tel que le polypropylène associée à un élastomère choisis parmi les élastomères suivants :
- SBS (Styrène butadiène styrène)
- SEBS (Styrène éthylène butadiène styrène)
- EPDM (éthylène propylène diène monomère)
- Polybutadiène
- Polyisoprène,
- Polyéthylène-butylène

La gaine en thermoplastique élastomère obtenue présente préférentiellement une contrainte au seuil σₛ supérieure à 20 MPa à 23°C, une résistance à la thermo-oxydation OIT supérieure à 40 minutes à 210°C et une résistance aux UV supérieure à 1 500 heures (Xenotest ou wather -0- meter ou équivalent). De plus, l'élastomère utilisé est avantageusement réticulé.

D'autres caractéristiques et avantages de l'invention se dégageront de la description qui va suivre en regards des dessins annexés qui ne sont donnés qu'à titre d'exemples non limitatifs
• La figure 1 représente schématiquement en perspective une conduite flexible de l'invention de type «rough-bore» et ses différentes couches.
• La figure 2 représente schématiquement en perspective une conduite flexible de type «smooth-bore».

La conduite tubulaire flexible 1 de l'invention est du type destinée à l'exploitation pétrolière offshore telle que celles définies par les recommandations de l'API 17B. Elle est constituée d'un ensemble de couches constitutives comprenant des gaines polymériques et des couches de renfort ou armures, lesdites couches pouvant le cas échéant être séparées par des enroulements de bandes diverses destinées à éviter le fluage des gaines ou destinées à former une isolation thermique par exemple. Elle peut de plus être de type liée, non liée ou semi-liée selon que les différentes couches sont entièrement, partiellement ou ne sont pas liées entre elles par une matrice plastique. La conduite tubulaire flexible 1 de l'invention est avantageusement une conduite du type conduite montante (« Riser » en anglais) reliant une installation sous-marine à une installation de surface (bouée, plate-forme, FPSO, ...)

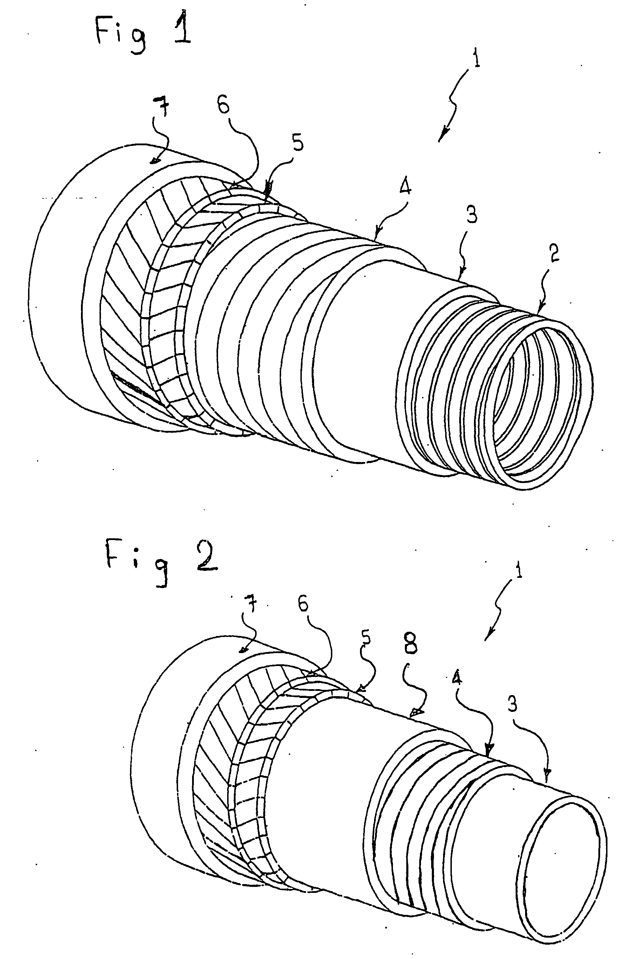

Selon le mode de réalisation illustré figure 1, la conduite flexible portant la référence générale 1 est du type non liée (« unbonded » en anglais) et de type «rough-bore», l'élément le plus interne étant formé par une carcasse métallique. La carcasse 2 est formée d'un enroulement à pas court d'un feuillard agrafé et a pour fonction de supporter la gaine d'étanchéité 3 pour éviter un écrasement potentiel de celle-ci. Une gaine d'étanchéité 3 appelée également gaine interne ou gaine de pression est située au-dessus de la carcasse 2. Elle est généralement obtenue par extrusion et a pour fonction de réaliser l'étanchéité du « bore » où circule le fluide et de résister à la composante radiale de la pression interne exercée par ledit fluide à l'aide de l'armure de pression 4 qui la recouvre.

La conduite illustrée figure 1 comporte également une armure ou voûte de pression 4 formée d'un enroulement à pas court d'un fil de forme métallique agrafé et destiné à reprendre la pression interne avec la gaine de pression qu'elle recouvre, ainsi que des nappes d'armures dites de traction 5,6 enroulées à pas long et destinées à reprendre les efforts longitudinaux auxquels peut être soumise la conduite (composante longitudinale de la pression ou efforts de pose par exemple). Il va de soi que la voûte de pression pourrait également comporter une frette. De même, on ne sortirait pas du champ d'application de la présente invention en réalisant des conduites comportant des nappes d'armures de traction enroulées avec un angle proche de 55° directement au-dessus de la gaine de pression et qui auraient pour fonction de reprendre à la fois les composantes radiale et axiale de la pression interne.

La conduite flexible 1 comporte également une gaine de protection externe 7 destinée à protéger les couches de renfort 4, 5, 6 situées dans l'espace annulaire qu'elle forme avec la gaine interne.

Selon une variante d'exécution de la conduite 1 illustrée figure 2, celle-ci comporte une gaine intermédiaire 8 sous la forme d'une gaine anti-collapse située entre la voûte de pression 4 et les armures de traction 5,6. Cette gaine est notamment destinée à réduire les risques d'écrasement de la gaine d'étanchéité 3 lorsque la gaine externe est endommagée et que l'annulaire se trouve soumis à la pression hydrostatique par exemple. Elle est ainsi destinée à supporter cette pression à l'aide de la voûte sur laquelle elle s'appuie, empêchant la pression hydrostatique de venir s'appliquer directement sur ladite gaine d'étanchéité.

Selon l'invention, la gaine externe 7 et/ou la gaine intermédiaire 8 de la conduite flexible est réalisée en polymère thermoplastique élastomère (TPE). La séquence thermoplastique utilisée pour former le polymère thermoplastique élastomère est choisie dans la famille des polyoléfines et est avantageusement un polypropylène (PP); lequel polypropylène peut être de la famille de homopolymères (PPH) ou copolymères (PPC). L'élastomère utilisé pour s'associer au thermoplastique est choisi dans les familles des butyle, EPDM (éthylène propylène diène monomère), SEBS (Styrène éthylène butadiène styrène), SBS (Styrène butadiène styrène), polyisoprène, polyéthylène-butylène et polybutadiène. La proportion en masse de chacun des composants dans le mélange de départ est comprise entre 30% et 70%.

Dans un mode de réalisation de l'invention, l'élastomère est avantageusement réticulé. Toutefois, il peut être envisagé de réaliser des gaines en polymère thermoplastique élastomère dont l'élastomère ne serait pas réticulé.

Selon un des modes de réalisation préféré de l'invention, la séquence thermoplastique utilisée pour former le polymère thermoplastique élastomère (TPE) est une oléfine greffée qui peut être réticulée en post-process (après extrusion). Cette oléfine peut être greffée avec du silane par exemple pour permettre une réticulation par hydrolyse telle que décrite dans le brevet EP 0 487 691 de la demanderesse. Néanmoins, le procédé de réticulation décrit dans le brevet de la demanderesse, n'est pas exhaustif et d'autres procédés de réticulation peuvent être appliqués suivant la formulation de polymère thermoplastique élastomère mise en oeuvre; comme par exemple, la réticulation péroxydique et la réticulation ionisante.

La gaine 7, 8 est avantageusement réalisée dans un polymère thermoplastique élastomère qui présente une contrainte au seuil σₛ, supérieure à 10 MPa. De préférence, cette contrainte au seuil sera choisie supérieur à 20 Mpa. Cette contrainte au seuil dépend principalement du ratio entre la séquence thermoplastique et l'élastomère ainsi que du taux d'extendeur présent dans la formulation du polymère thermoplastique élastomère. Ces différents ratios seront ainsi optimisés pour obtenir la contrainte au seuil minimale requise.

Le polymère thermoplastique élastomère utilisé comprend en outre des additifs méticuleusement choisis de manière à conférer des caractéristiques physiques intrinsèques à la gaine (7,8) réalisée qui la rendent compatibles avec son utilisation dans des applications pétrolières offshore et plus particulièrement des applications dynamiques.

Les polymères thermoplastiques élastomères commerciaux comprennent de façon courante des stabilisants thermiques et UV choisis dans la famille des sulfites et des phénols. Les stabilisants, tels que ceux utilisés dans les polymères thermoplastiques élastomères revendiqués, sont connus sous les noms commerciaux Irganox et plus particulièrement Irganox HP 136 de CIBA (Marques déposées) pouvant êtres associés à des costabilisants type Irganox 1010 ou 1076 (Marques déposées). La nature et la quantité de ces antioxydants sont choisies de manière à ce que le polymère thermoplastique élastomère obtenu présente une résistance importante à la thermo-oxydation. On choisira ainsi l'antioxydant de manière à obtenir un OIT à 210° C supérieur à 20 minutes et préférentiellement supérieur à 40 minutes.

De plus, le polymère thermoplastique élastomère comprendra également des additifs destinés à renforcer la résistance aux UV de la gaine 7,8. Ces additifs anti-UV seront avantageusement choisis afin de confier au matériau une résistance supérieure à 1500 heures (Xenotest ou water-O-meter procédure Renault 1380 ou équivalent). On choisira préférentiellement des stabilisant UV dans la famille des HALS (hindered amine light stabilizers) du fait que ces stabilisants tirent leur efficacité du fait qu'ils n'absorbent pas les UV et ne sont pas consommés pendant le procédé de stabilisation mais sont régénérés. Ces stabilisants sont connus commercialement sous le nom de Chimassorb (Marque déposée) et peuvent être associés à des absorbeurs d'UV connus sous le nom de Tinuvin de la société CIBA (Marque déposée). On peut citer à titre d'exemple le Tinuvin 783 constitué de chimassorb 944 et de tinuvin 622.

Selon une autre caractéristique du matériau thermoplastique utilisé, celui-ci comporte des extendeurs destinés à faciliter la mise en oeuvre du matériau. Toutefois, afin d'éviter les inconvénients dus aux sollicitations lors de la pose, la teneur en extendeur sera choisie pour permettre l'obtention d'une contrainte au seuil supérieure à 10 Mpa.

## Revendications

1. Conduite tubulaire flexible (1) pour le transport de fluide dans le domaine de l'exploitation pétrolière offshore du type comportant au moins une gaine polymérique interne d'étanchéité (3), une ou plusieurs couches de renforts formés d'enroulements de fils de forme ou de feuillards métalliques ou d'éléménts allongés composites (4, 5, 6), au moins une deuxième gaine polymérique telle qu'une gaine de protection externe (7) ou une gaine intermédiaire (8), **caractérisée en ce que** ladite deuxième gaine polymérique est réalisée en polymère thermoplastique élastomère (TPE) comprenant des additifs anti-UV choisis pour que sa résistance soit supérieur à 1500h (Xenotest).

2. Conduite tubulaire flexible selon la revendication 1, **caractérisée en ce que** les additifs anti-UV sont choisis dans la famille des HALS.

3. Conduite tubulaire flexible selon la revendication 1 ou 2, **caractérisée en ce que** la séquence thermoplastique du polymère thermoplastique élastomère (TPE) est une oléfine.

4. Conduite tubulaire flexible selon la revendication 3, **caractérisée en ce que** la séquence thermoplastique du polymère thermoplastique élastomère (TPE) est une oléfine greffée réticulable.

5. Conduite tubulaire flexible (1) selon l'une quelconque des revendications précédentes **caractérisée en ce que** la séquence thermoplastique utilisée pour former le polymère thermoplastique élastomère (TPE) est un polypropylène.

6. Conduite tubulaire flexible (1) selon l'une quelconque des revendications précédentes, **caractérisée en ce que** l'élastomère utilisé pour former le polymère thermoplastique élastomère (TPE) est choisi parmi les élastomères suivants :
- SBS (Styrène butadiène styrène)
- SEBS (Styrène éthylène butadiène styrène)
- EPDM (éthylène propylène diène monomère)
- Polybutadiène
- Polyisoprène
- Polyéthylène-butylène.

7. Conduite tubulaire flexible (1) selon l'une quelconque des revendications précédentes, **caractérisée en ce que** le polymère thermoplastique élastomère utilisé pour former la deuxième gaine polymérique présente une contrainte au seuil σₛ, supérieure à 10 MPA.

8. Conduite tubulaire flexible (1) selon l'une quelconque des revendications précédentes, **caractérisée en ce que** le thermoplastique élastomère utilisé pour former la deuxième gaine polymérique présente une résistance à la thermo-oxydation OIT à 210°C supérieure à 20 minutes.

9. Conduite tubulaire flexible (1) selon l'une quelconque des revendications précédentes, **caractérisée en ce que** la deuxième gaine réalisée en thermoplastique élastomère est formée par la gaine externe de protection (7) de la conduite 1.

10. Conduite tubulaire flexible (1) selon l'une quelconque des revendications précédentes, **caractérisée en ce que** la deuxième gaine réalisée en thermoplastique élastomère est formée par une gaine intermédiaire (8).

## Patentansprüche

1. Flexible Rohrleitung (1) für den Transport von Fluid auf dem Gebiet der küstenfernen bzw. Offshore-Erdölförderung der Art, umfassend wenigstens eine polymere, innere Dichtumhüllung bzw. -ummantelung (3), eine oder mehrere Verstärkungsabdeckung(en), die aus Garn- bzw. Fadenumwicklungen oder metallischen Bändern oder länglichen, zusammengesetzten Elementen (4, 5, 6) gebildet ist bzw. sind, wenigstens eine zweite Polymerumhüllung, wie eine äußere Schutzumhüllung (7) oder eine zwischenliegende bzw. Zwischenumhüllung (8), **dadurch gekennzeichnet, daß** die zweite Polymerumhüllung aus einem elastomeren, thermoplastischen Polymer (TPE) gebildet ist, umfassend Anti-UV-Zusätze bzw. -Additive, die gewählt sind, damit ihr Widerstand über 1.500h (Xenotest) liegt.

2. Flexible Rohrleitung nach Anspruch 1, **dadurch gekennzeichnet, daß** die Anti-UV-Additive aus der Familie der HALS gewählt sind.

3. Flexible Rohrleitung nach Anspruch 1 oder 2, **dadurch gekennzeichnet, daß** die thermoplastische Sequenz des thermoplastischen, elastomeren Polymers (TPE) ein Olefin ist.

4. Flexible Rohrleitung nach Anspruch 3, **dadurch gekennzeichnet, daß** die thermoplastische Sequenz des elastomeren, thermoplastischen Polymers (TPE) ein vernetzbares, geimpftes bzw. veredeltes Olefin ist.

5. Flexible Rohrleitung (1) nach einem der vorhergehenden Ansprüche, **dadurch gekennzeichnet, daß** die thermoplastische Sequenz, die verwendet ist, um das elastomere, thermoplastische Polymer (TPE) auszubilden, ein Polypropylen ist.

6. Flexible Rohrleitung (1) nach einem der vorhergehenden Ansprüche, **dadurch gekennzeichnet, daß** das für ein Ausbilden des elastomeren, thermoplastischen Polymers (TPE) verwendete Elastomer unter den folgenden Elastomeren gewählt ist:
- SBS (Styrolbutadienstyrol)
- SEBS (Styrolethylenbutadienstyrol)
- EPDM (Ethylpropylendienmonomer)
- Polybutadien
- Polyisopren
- Polyethylenbutylen.

7. Flexible Rohrleitung (1) nach einem der vorhergehenden Ansprüche, **dadurch gekennzeichnet, daß** das für ein Ausbilden der zweiten polymeren Umhüllung verwendete elastomere, thermoplastische Polymer eine Schwellspannung σₛ über 10 MPA aufweist.

8. Flexible Rohrleitung (1) nach einem der vorhergehenden Ansprüche, **dadurch gekennzeichnet, daß** das für ein Ausbilden der zweiten polymeren Umhüllung verwendete thermoplastische Elastomer einen Widerstand gegenüber der Thermooxidation OIT bei 210 °C über 20 Minuten aufweist.

9. Flexible Rohrleitung (1) nach einem der vorhergehenden Ansprüche, **dadurch gekennzeichnet, daß** die aus einem thermoplastischen Elastomer realisierte bzw. ausgebildete Umhüllung durch die externe Schutzumhüllung (7) der Leitung 1 gebildet ist.

10. Flexible Rohrleitung (1) nach einem der vorhergehenden Ansprüche, **dadurch gekennzeichnet, daß** die zweite Umhüllung, die aus einem thermoplastischen Elastomer realisiert ist, durch eine zwischenliegende Umhüllung (8) gebildet ist.

## Claims

1. A flexible tubular pipe (1) for transporting fluid in the field of offshore petroleum development, of the type comprising at least one impervious inner polymer sheath (3), one or more reinforcing layers formed from coils of reinforcing wires or of metallic strips or of long composite elements (4, 5, 6), at least one second polymer sheath such as an outer protective sheath (7) or an intermediate sheath (8), **characterized in that** said second polymer sheath is made of elastomeric thermoplastic polymer (TPE).

2. The flexible tubular pipe (1) as claimed in claim 1, **characterized in that** the thermoplastic block of the elastomeric thermoplastic polymer (TPE) is an olefin.

3. The flexible tubular pipe as claimed in claim 2, **characterized in that** the thermoplastic block of the elastomeric thermoplastic polymer (TPE) is a crosslinkable grafted olefin.

4. The flexible tubular pipe (1) as claimed in any one of the preceding claims, **characterized in that** the thermoplastic block used to form the elastomeric thermoplastic polymer (TPE) is a polypropylene.

5. The flexible tubular pipe (1) as claimed in any one of the preceding claims, **characterized in that** the elastomer used to form the elastomeric thermoplastic polymer (TPE) is chosen from the following elastomers:
- SBS (styrene butadiene styrene)
- SEBS (styrene ethylene butadiene styrene)
- EPDM (ethylene propylene diene monomer)
- polybutadiene
- polyisoprene
- polyethylene-butylene

6. Flexible tubular pipe (1) as claimed in any one of the preceding claims, **characterized in that** the elastomeric thermoplastic polymer used to form the second polymer sheath has a yield point stress σₛ of greater than 10 MPa.

7. The flexible tubular pipe (1) as claimed in any one of the preceding claims, **characterized in that** the elastomeric thermoplastic used to form the second polymer sheath has a resistance to thermal oxidation OIT at 210°C of greater than 20 minutes.

8. The flexible tubular pipe (1) as claimed in any one of the preceding claims, **characterized in that** the elastomeric thermoplastic used to form the second polymer sheath comprises anti-UV additives chosen such that its stability is greater than 1500 hours (Xenotest).

9. The flexible tubular pipe (1) as claimed in any one of the preceding claims, **characterized in that** the second sheath made of elastomeric thermoplastic is formed by the outer protective sheath (7) of the pipe 1.

10. The flexible tubular pipe (1) as claimed in any one of the preceding claims, **characterized in that** the second sheath made of elastomeric thermoplastic is formed by an intermediate sheath (8).
